# EUROPÄISCHE PATENTSCHRIFT

(11) **EP 3 172 072 B1**
(45) Veröffentlichungstag und Bekanntmachung des Hinweises auf die Patenterteilung: **06.10.2021**
(21) Anmeldenummer: 15735857.3
(22) Anmeldetag: 08.07.2015
(51) Int. Cl.: B60G 17/015, B62D 7/14, B62D 9/04, B62D 17/00

(54) **RADTRÄGER FÜR EIN ZWEISPURIGES KRAFTFAHRZEUG**
DEVICE FOR ADJUSTING CAMBER AND/OR TOE OF A VEHICLE WHEEL
DISPOSITIF POUR RÉGLER LE CARROSSAGE ET/OU PARALLÉLISME D'UN ROUE D'UN VÉHICULE

(30) Priorität: 26.07.2014 DE 102014011194
(43) Veröffentlichungstag der Anmeldung: 31.05.2017
(73) Patentinhaber: Audi AG, 85045 Ingolstadt (DE)
(72) Erfinder: SCHMID, Wolfgang, 85354 Freising (DE); KLINGER, Thomas, 85057 Ingolstadt (DE); VOLL, Ulrich, 80336 München (DE); BRAUMANDL, Michael, 85391 Allershausen (DE); BERINGER, Heinrich, 85095 Denkendorf (DE); GLAS, Achim, 85080 Gaimersheim (DE)
(74) Vertreter: Reichert, Thomas Klaus
(86) Internationale Anmeldenummer: PCT/EP2015/001394
(87) Internationale Veröffentlichungsnummer: WO 2016/015819

(56) Entgegenhaltungen:
- EP-A1- 2 298 581
- DE-A1-102009 058 489
- US-A- 5 009 447
- US-A1- 2010 320 706

## Beschreibung

Die Erfindung betrifft einen Radträger für ein zweispuriges Kraftfahrzeug nach dem Oberbegriff des Patentanspruches 1.

Aus der DE 10 2009 058 489 A1 ist ein gattungsgemäßer Radträger für ein Fahrzeugrad bekannt, der mehrteilig gestaltet ist, und zwar mit einem radseitigen Trägerteil und einem achsseitigen Führungsteil sowie mit dazwischen angeordneten Drehteilen. Im radseitigen Trägerteil ist ein Radlager integriert, in dem ein Radnabenabschnitt eines, das Fahrzeugrad tragenden Radflansches drehbar gelagert ist. Am achsseitigen Führungsteil sind die Lenker der Radaufhängung des Fahrzeugs anlenkbar. Die rad- und achsseitigen Drehteile sind jeweils um Drehwinkel gleich- und/oder gegensinnig verstellbar und an einer gemeinsamen Drehlagerstelle um eine Drehachse zueinander verdrehbar abgestützt. Das Trägerteil ist zur Spur-/Sturzverstellung des Fahrzeugrads um einen Taumelpunkt verschwenkbar. Dies erfolgt durch eine Drehverstellung zumindest eines der Drehteile um einen Drehwinkel in eine Drehposition, die mit einem Spur- und/oder Sturzwinkel des Fahrzeugrads korreliert. Durch die Drehteil-Verstellung ist der Spur- und/oder Sturzwinkel des Fahrzeugrads innerhalb eines Spur-/Sturzwinkelbereichs beliebig einstellbar.

Die Drehteile werden zur Spur-/Sturzverstellung von einem elektronischen Steuergerät angesteuert, das in Abhängigkeit von aktuellen Fahrbetriebsparametern des Fahrzeugs Drehwinkel für die Drehteile ermittelt, auf deren Grundlage die Stellmotoren der Drehteile ansteuerbar sind. Die Drehteile können beispielsweise über einen Zahnradantrieb betrieben werden.

Bei einem solchen Zahnradantrieb kann die Außenverzahnung am jeweiligen Drehteil vollumfänglich ausgebildet sein. Aufgrund dieser Außenverzahnung ist der maximalen Durchmesser der Außenverzahnung begrenzt, weil sie - unter Berücksichtigung eines Freigangs - innerhalb der umgebenden Bauteile (bspw. Bremssättel, ABS-Sensor, Lenker der Radaufhängung) liegen muss. Zudem sind für eine zuverlässige Steuerung der Drehteile kostspielige Absolutwinkelsensor erforderlich, um die Absolut-Drehposition der Drehteile zu ermitteln.

Tritt bei der Betätigung der Drehteile ein entsprechender Fehler auf, beispielsweise am angeschlossenen Stellmotor, so ist das Fahrzeugrad lose innerhalb des Spur-/Sturzbereiches räumlich verstellbar. In einem solchen Fehlerfall sind Kollisionen mit angrenzenden Bauteilen möglich und zu verhindern. Das heißt, es sind entsprechende Vorkehrungen für einen Fail-Safe-Fall zu treffen, zum Beispiel Motorbremsen, die bei einem Versagen des Stellmotors automatisch greifen.

Aus der US 5 009 447 A ist eine Radaufhängung für ein lenkbares Rad bekannt. Die US 2010/320706 A1 offenbart ein Steuergerät und ein Fahrzeug. Aus der EP 2 298 581 A1 ist eine Vorrichtung zur Änderung des Sturzwinkels bekannt.

Die Aufgabe der Erfindung besteht darin, einen Radträger bereitzustellen, bei dem in einfacher und zuverlässiger Weise bei einem Fehlerfall radträgerinterne Kollisionen oder aber Kollisionen zwischen Fahrzeugrad und Federbein, Fahrzeugrad und Rohbau etc. einfacher vermieden werden können.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist der Radträger zumindest einen Bewegungsanschlag auf, mit dem der Spur-/Sturzwinkelbereich des Fahrzeugrads begrenzbar ist. Erfindungsgemäß ist somit im oben definierten Fehlerfall die Drehung der Drehteile durch die (insbesondere mechanische) Bewegungsanschläge begrenzt, so dass diese maximal nur noch über ein begrenztes Winkelsegment gedreht werden können. Dieses Winkelsegment kann beispielhaft einen Winkel von 146° aufweisen.

Erfindungsgemäß ist der Bewegungsanschlag zumindest ein Drehwinkelanschlag, der die Absolutdrehung des jeweiligen Drehteils begrenzt. Das heißt, der Drehwinkelanschlag begrenzt eine Drehverstellung zwischen dem drehfesten radseitigen Trägerteil und dem radseitigen Drehteil und/oder zwischen dem drehfesten achsseitigen Führungsteil und dem achsseitigen Drehteil. Mittels des Drehwinkelanschlags kann die Drehverstellung des Drehteils auf ein Winkelsegment begrenzt sein, das kleiner als 360° ist, insbesondere kleiner als 180° ist.

Durch die Verkürzung des Winkelsegments auf einen Bereich nennenswert kleiner 180° kann zusätzlich nutzbarer Bauraum generiert werden. Dabei sind (im Falle eines Zahnradantriebs) Mindestüberdeckungen der Verzahnungen Antriebsritzel/Rad, Zahnausläufe und Mindestabstände der Abstände zu berücksichtigen. Durch entsprechende Positionierung des Antriebsritzels kann gezielt Bauraum geschaffen werden für beispielsweise Bremssattel, ABS-Sensor, Lenker der Radaufhängung.

Ein weiterer Vorteil der obigen Drehwinkelanschläge an den Drehteilen besteht darin, dass mit diesen eine Softwarefunktion umgesetzt werden kann, die die kostspieligen Absolutdrehzahlsensoren ersetzen kann. Wird langsam in die Bewegungsanschläge gefahren, so erkennt das System zu diesem Zeitpunkt die absolute Lage der Drehteile und kann ab sofort mit Relativdrehzahlsensoren (bspw. der Motorsteuerung) arbeiten. Aus Redundanzgründen kann zusätzlich ein Absolutdrehzahlsensor vorgesehen werden. Die Funktion kann sowohl für den Fahrzeugstart als auch für die Erstinbetriebnahme (Eichung der etwaigen Absolutdrehzahlsensoren) genutzt werden.

Zudem können die Bewegungsanschläge an den Drehteilen relativ klein ausgeführt sein, weil die an den Drehteilen anliegenden Momente relativ klein sind. Dagegen sind die Kontaktkräfte zwischen dem Trägerteil und dem Führungsteil ungleich höher, und zwar aufgrund der Eigenübersetzung des (aus den Drehteilen und den Träger- und Führungsteilen aufgebauten) Aktors.

Zusätzlich kann der Bewegungsanschlag unmittelbar zwischen dem Trägerteil (Bremsenträger) und dem Führungsteil wirken. Das heißt es werden nicht unmittelbar die Drehteil-Verdrehungen begrenzt. Vielmehr wirkt dieser Bewegungsanschlag direkt zwischen dem Trägerteil (Bremsenträger) und dem Führungsteil (also so, dass sich das Trägerteil in der Fahrzeugquerrichtung gegen das Führungsteil drückt und dadurch den Spurund/oder Sturzwinkel begrenzt). Bei einer Sturz-/Spurverstellung des Fahrzeugrads wird also ein Verlagerungsweg des Trägerteils in Richtung auf das Führungsteil begrenzt. Ein derartiger Bewegungsanschlag kann Druckelemente aufweisen, die am Trägerteil (Bremsenträger) und/oder am Führungsteil ausgebildet sind und bei einer Sturz-/Spurverstellung des Fahrzeugrads miteinander in Druckanlage bringbar sind.

Zusätzlich kann der Bewegungsanschlag eine Relativdrehung zwischen den Drehteilen begrenzen. In diesem Fall kann der Bewegungsanschlag Mitnehmerelemente aufweisen, die zwischen den beiden Drehteilen geschaltet sind. Bei einer Drehverstellung zumindest eines der Drehteile können die Mitnehmerelemente eine Bewegungskopplung erzeugen, bei der die beiden Drehteile über einen gemeinsamen Verstellweg sowohl gleichsinnig als auch mit identischer Verstellgeschwindigkeit verstellbar sind.

Besonders bevorzugt ist eine Kombination aus Bewegungsanschlägen, die sowohl die Relativbewegung zwischen den Drehteilen begrenzen als auch die Absolutbewegungen der achs- und radseitigen Drehteile mit Bezug auf das radseitige Trägerteil und das achsseitige Führungsteil begrenzen. In diesem Fall kann auf die oben erwähnten Druckelemente verzichtet werden, die den Verlagerungsweg des radseitigen Trägerteils in Richtung auf das Führungsteil begrenzen. Derartige Druckelemente müssten nämlich aufgrund der hohen Eigenübersetzung des Radträgers äußerst großen Verstellkräften standhalten können und damit sehr stabil ausgeführt sein.

Zur Spur-/Sturzverstellung ist ein elektronisches Steuergerät mit einer Auswerteeinheit bereitstellbar, in der in Abhängigkeit von Fahrbetriebsparametern des Fahrzeugs Wertepaare, bestehend aus einem Drehwinkel für das achsseitige Drehteil und aus einem Drehwinkel für das radseitige Drehteil, ermittelbar sind, auf deren Grundlage die Antriebseinheit des Drehteils ansteuerbar ist.

Die oben angegebenen Bewegungsanschläge können bevorzugt als mechanische Anschlagelemente ausgebildet sein, die am radseitigen Trägerteil, an den Drehteilen und/oder am achsseitigen Führungsteil ausgebildet sind. Alternativ dazu können die Bewegungsanschläge elektronisch ausgeführt sein, etwa als berührungslose Endlagen-Schalter oder dergleichen. Solche Schalter können zum Beispiel berührungsempfindlich und ggf. fettunempfindlich ausgeführt sein. Überfährt ein Drehteil den Schalter, so kann sich ein Stromkreis schließen und ein Schaltimpuls erzeugt werden, der an das Steuergerät geleitet wird, woraufhin Maßnahmen einleitbar sind, die ein weiteres Verdrehen des Drehteils verhindern.

In einer technischen Umsetzung des Radträgers kann das radseitige Drehteil unter Bildung einer ersten Drehteil-Achse an einer Lagerstelle drehbar mit dem radseitigen Trägerteil verbunden sein. Das achsseitige Drehteil kann unter Bildung einer zweiten Drehteil-Achse an einer Lagerstelle drehbar mit dem Führungsteil verbunden sein. Bei einer solchen Konfiguration ergibt sich eine regelungstechnisch nachteilige Singularität, sofern die oben definierten Drehteil-Achsen in einer Nulllage zueinander koaxial, das heißt fluchtend ausgerichtet sind. Im Falle einer derartigen Singularität ist die Eigenübersetzung theoretisch unendlich groß und ist daher eine stark beschleunigte Rotationsbewegung der Drehteile erforderlich, um eine konstante Verstellgeschwindigkeit bei der Sturz-/Spurverstellung des Fahrzeugrads zu gewährleisten. Um eine solche Singularität zu vermeiden, kann bevorzugt der von den Bewegungsanschlägen begrenzte Sturz-/Spurwinkelbereich so definiert sein, dass die zu einer Singularität führende Nulllage außerhalb des von den Bewegungsanschlägen definierten Spur-/Sturzbereiches liegt.

Die Erfindung und ihre vorteilhaften Aus- und Weiterbildungen sowie deren Vorteile werden nachfolgend anhand von Zeichnungen näher erläutert.

### Es zeigen:

- Fig. 1: in einer Vollschnittansicht den Radträger mit angebautem Fahrzeugrad;
- Fig. 2: eine Schnittdarstellung entlang der Schnittebene l-l aus der Fig. 1;
- Fig. 3a und 3b: jeweils vereinfachte Schnittdarstellungen entlang der Schnittebene ll-ll aus der Fig. 1;
- Fig. 4a und 4b: den Radträger jeweils in einer Ansicht von oben und in einer Ansicht von hinten;
- Fig. 5a und 5b: jeweils Diagramme die den von den Bewegungsanschlägen begrenzten Drehwinkelbereich mit dazu korrelierendem Spur-Sturzwinkelbereich gemäß einem ersten Ausführungsbeispiel darstellen;
- Fig. 6a und 6b: Ansichten entsprechend den Fig. 5a und 5b gemäß einem zweiten Ausführungsbeispiel; und
- Fig. 7a und 7b: Ansichten entsprechend den Fig. 5a und 5b gemäß einem dritten Ausführungsbeispiel.

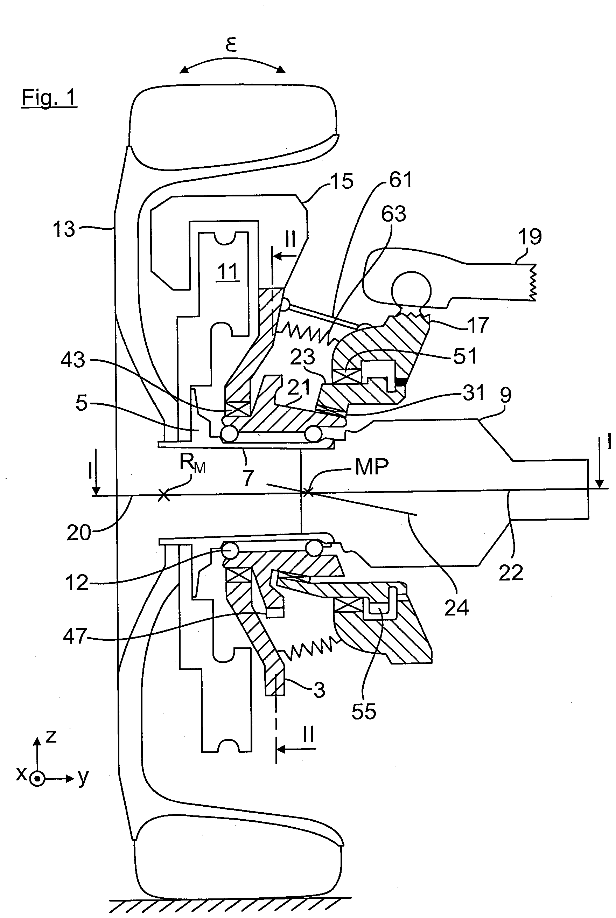

In der Fig. 1 ist ein Radträger mit angebautem Fahrzeugrad 13 in einer Seitenansicht gezeigt. Der Radträger weist ein Trägerteil 3 auf, in dem unter Zwischenschaltung eines Lagers 43 ein Radflansch 5 mit seinem Nabenabschnitt 7 drehbar in einem Radlager 12 gelagert ist. Am Radflansch 5 ist eine Bremsscheibe 11 sowie ein Fahrzeugrad 13 mit seiner Felge montiert. Die Bremsscheibe 11 ist zusammen mit einem am Trägerteil 3 montierten Bremssattel 15 Bestandteil einer Bremsanlage. Durch den Radträger hindurch ist eine, das Fahrzeugrad 13 antreibende Gelenkwelle geführt, an dessen Gleichlaufgelenk 9 eine ebenfalls nicht dargestellte Zentralschraube eingeschraubt ist, mit der über die Radnabe 5 und das Gleichlaufgelenk 9 das Radlager 12 verspannt wird.

Ferner weist der Radträger ein Führungsteil 17 auf, an dem in der Fig. 1 beispielhaft ein Lenker 19 der Radaufhängung angelenkt ist. Zwischen dem Trägerteil 3 und dem Führungsteil 17 sind als Stellelemente zwei Drehteile 21, 23 vorgesehen. Das Drehteil 21 ist unter Bildung einer Drehteil-Achse 20 an einer Lagerstelle 43 drehbar mit dem Trägerteil 3 verbunden. Das Drehteil 23 ist unter Bildung der Drehachse 22 an einer Lagerstelle 51 mit dem Führungsteil 17 verbunden. In der Fig. 1 sind die beiden Drehteile 21, 23 über eine gemeinsame Lagerstelle 31 zueinander in Dreh- und/oder Gleitlagerung und über eine Drehachse 24 verdrehbar miteinander verbunden. Die Drehachse 24 ist in der Fig. 1 in einem jeweils definierten Winkel zu den Drehteil-Drehachsen 20, 22 geneigt ausgerichtet.

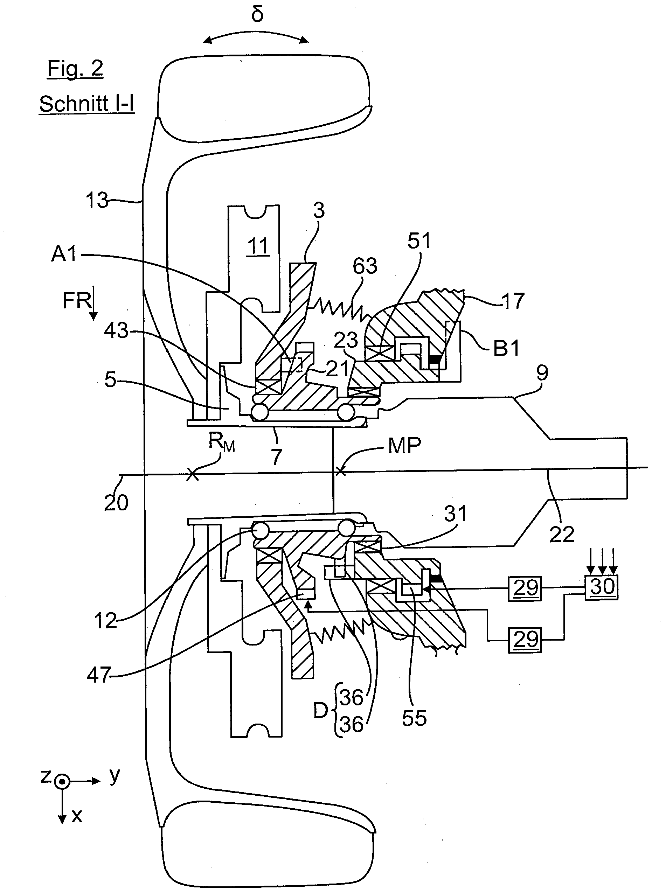

In der Fig. 1 und 2 sind die beiden Drehteile 21, 23 beispielhaft in einer Nulllage gezeigt, in der die erste Drehteil-Achse 20 mit der zweiten Drehteil-Achse 22 koaxial, das heißt fluchtend, ausgerichtet sind. Eine solche Nulllage führt zu einer regelungstechnisch nachteiligen Singularität, bei der die Eigenübersetzung theoretisch unendlich groß wird. In der Nähe der Singularität ist daher eine sehr stark beschleunigte Rotationsbewegung der Drehteile 21, 23 erforderlich ist, um eine konstante Verstellgeschwindigkeit bei der Sturz-/Spurverstellung des Fahrzeugrads 13 zu gewährleisten. Für den Regelungsbetrieb ist es daher von Vorteil, wenn die zu einer Singularität führende Nulllage außerhalb des zulässigen Sturz-/Spurbereiches S liegt.

Sowohl am Trägerteil 3 als auch am Führungsteil 17 ist jeweils ein nur in der Fig. 2 angedeuteter elektrischer Stellmotor 29 montiert, der mit den Drehteilen 21, 23 über nicht dargestellte Zahnradtriebe trieblich verbunden ist. Mittels der Stellmotoren 29 können die beiden Drehteile 21, 23 gleichsinnig oder gegensinnig verdreht werden, wodurch das Trägerteil 3 relativ zum Führungsteil 17 eine Schwenkbewegung oder Taumelbewegung um einen Momentanpol MP ausführt und so den Spurwinkel δ (Fig. 2) und/oder den Sturzwinkel ε (Fig. 1) des Fahrzeugrads 13 entsprechend verändert.

Die Stellmotoren 29 sind in der Fig. 2 in Signalverbindung mit einem elektronischen Steuergerät 30 dargestellt, in dem in Abhängigkeit von Fahrbetriebsparametern Wertepaare, bestehend aus einem Drehwinkel β für das radseitige Drehteil 21 und aus einem Drehwinkel θ für das achsseitige Drehteil 23, ermittelbar sind, auf deren Grundlage die Stellmotoren 29 zur Spur/Sturzverstellung des Fahrzeugrads 13 ansteuerbar sind.

Das achsseitige Führungsteil 17 ist - analog zum radseitigen Trägerteil 3 - an einem Drehlager 51 radial außen auf dem achsseitigen Drehteil 23 abgestützt. Im weiteren Verlauf in der Fahrzeugquerrichtung y nach innen ist am Außenumfang des achsseitigen Drehteils 23 beispielhaft ein weiterer Zahnradabschnitt 55 angeformt, der ebenfalls Bestandteil des Zahnradtriebs 30 ist. Der Zahnradabschnitt 55 des achsseitigen Drehteils 23 ist in einem Ringraum positioniert, der in der Fahrzeugquerrichtung y nach außen durch das Drehlager 51 begrenzt ist und nach innen durch eine Ringdichtung begrenzt ist, die zwischen dem Führungsteil 17 und dem achsseitigen Drehteil 23 angeordnet ist. Im Übrigen können sich weitere nicht dargestellte Dichtungen im System befinden.

Zudem ist zwischen dem Trägerteil 3 und dem Führungsteil 17 in der Fig. 1 eine Koppelstange 61 montiert. Diese wirkt als ein Drehmomentübertragungselement, über das Drehmomente, insbesondere ein Bremsmoment und/oder Motorenmomente des äußeren Drehantriebs 29, vom Trägerteil 3 zum Führungsteil 17 übertragbar sind, und zwar unter Überbrückung der achs- und radseitigen Drehteile 21, 23. Die Koppelstange 61 ist beispielhaft radial außerhalb einer umlaufenden Gummi- oder Kunststoffmanschette 63 angeordnet, die die Drehteile 21, 23 und deren Lagerstellen schmutzdicht abdichtet.

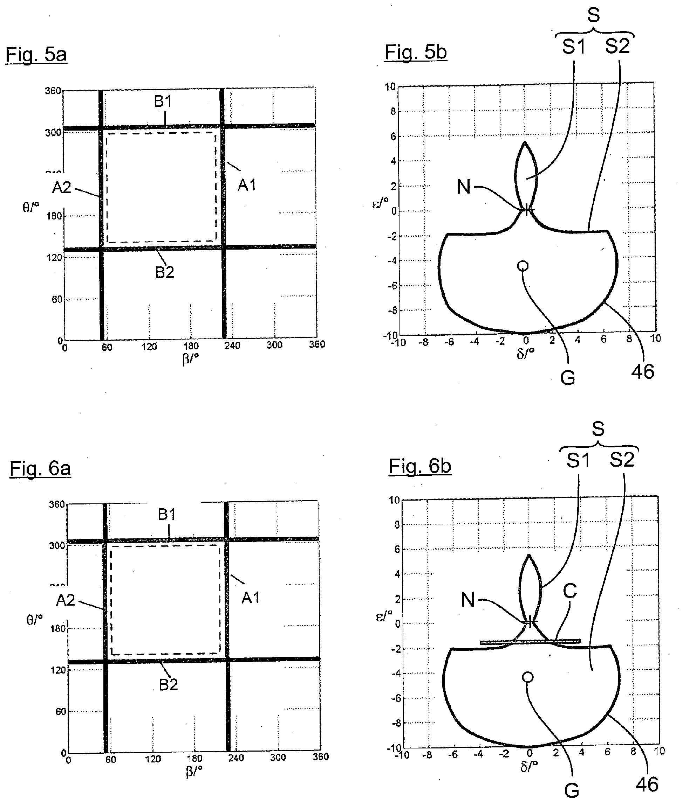

Wie aus den Fig. 1 bis 4 hervorgeht, weist der Radträger unterschiedlich ausgeführte mechanische Bewegungsanschläge A1, A2, B1, B2, C, D auf, mit denen der Spur-/Sturzwinkelbereich S (Fig. 5b, 6b, 7b) des Fahrzeugrads 13 begrenzbar ist. Die Drehverstellung zumindest eines der Drehteile 21, 23 um einen Drehwinkel θ, β resultiert in einer Spur- und/oder Sturzwinkelverstellung. Die Spur- /Sturzwinkel δ, ε des Fahrzeugrads 13 sind innerhalb des Spur/Sturzwinkelbereichs S beliebig einstellbar.

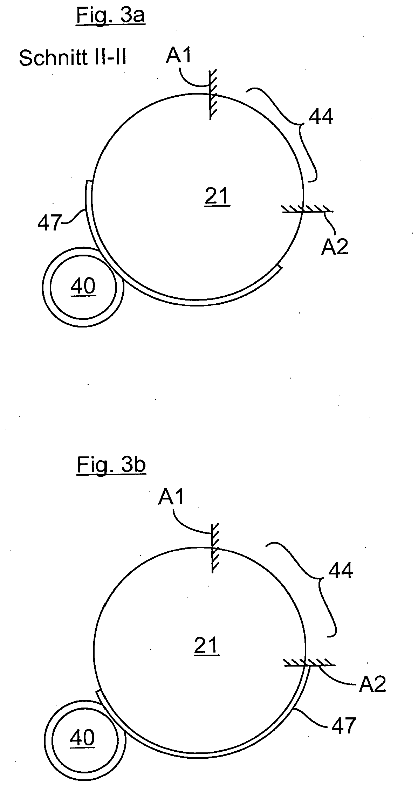

Die in der Fig. 2 angedeuteten Bewegungsanschläge A1 und B1 sind als Drehwinkelanschläge ausgeführt, die eine Drehverstellung zwischen dem drehfesten radseitigen Trägerteil 3 und dem radseitigen Drehteil 21 sowie zwischen dem drehfesten achsseitigen Führungsteil 17 und dem achsseitigen Drehteil 23 begrenzen. Dabei wird mittels der Drehwinkelanschläge A1, A2, B1, B2 die Drehverstellung des achs- und radseitigen Drehteils 21, 23 auf ein Winkelsegment Δβ, Δθ begrenzt, das beispielsweise kleiner als 180° ist. Das Winkelsegment Δβ, Δθ kann je nach geometrischen Gegebenheiten auch größer als 180° ausgelegt sein. In den Fig. 3a und 3b wirken die Bewegungsanschläge A1, A2 mit den jeweils zugewandten Enden der Verzahnung 47 zusammen.

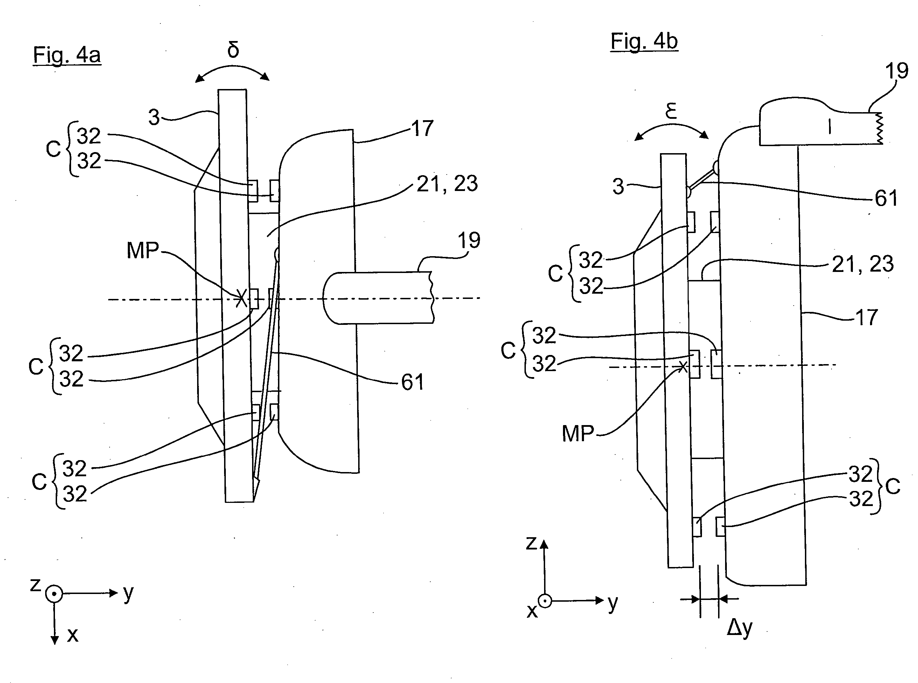

Der nur in den Fig. 4a und 4b gezeigte Bewegungsanschlag C weist einander in der Fahrzeugquerrichtung y fluchtend gegenüberliegende Druckelemente 32 auf, die beispielhaft paarweise sowohl am Trägerteil 3 als auch am Führungsteil 17 ausgebildet sind und bei einer Sturz-/Spurverstellung des Fahrzeugrads 13 miteinander in Druckanlage bringbar sind. Auf diese Weise wird bei einer Sturz-/Spurverstellung des Fahrzeugrads 13 ein Verlagerungsweg Δy des Trägerteils 3 in Richtung auf das Führungsteil 17 begrenzt.

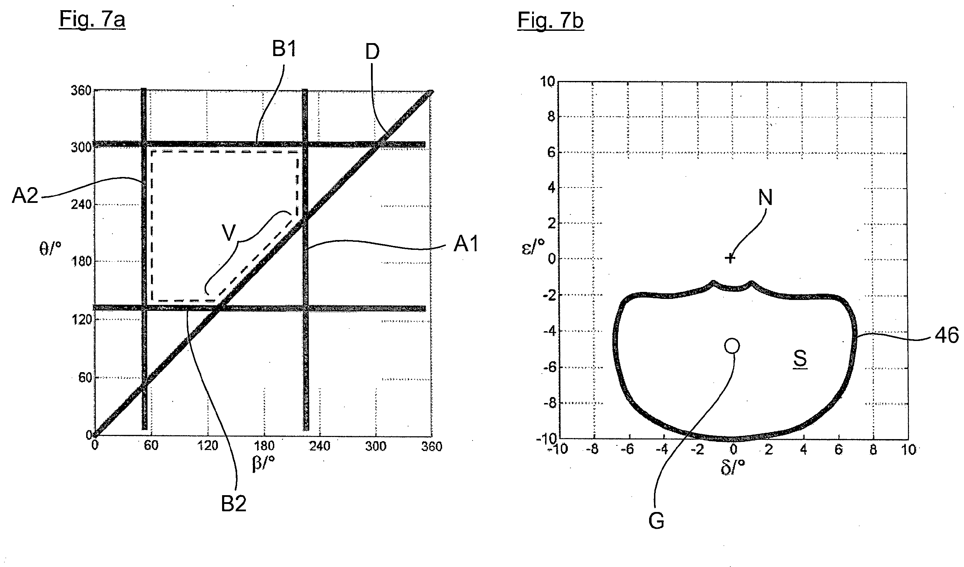

Zudem ist in der Fig. 2 der Bewegungsanschlag D bereitgestellt. Dieser weist zueinander korrespondierende Mitnehmerelemente 36 auf, die sowohl am achsals auch am radseitigen Drehteil 21, 23 ausgebildet sind. Der Bewegungsanschlag D begrenzt eine Relativdrehung zwischen den Drehteilen 21, 23. Das heißt, sofern die Mitnehmerelemente 36 des Bewegungsanschlags D in Anlage sind, sind die Drehteile 21, 23 in einer Bewegungskopplung, bei der die beiden Drehteile 21, 23 über einen Verstellweg V (Fig. 7a) sowohl gleichsinnig als auch mit identischer Verstellgeschwindigkeit verstellt werden. Sofern der Bewegungsanschlag D in Kontakt ist, können die beiden Drehteile 21, 23 sich nicht weiter relativ zueinander bewegen. Es sind nur noch gekoppelte Bewegungen möglich oder die Relativbewegung derart, dass die Kontaktstelle des Bewegungsanschlags D wieder geöffnet wird.

In den Fig. 3a und 3b ist die Zahnradverbindung zwischen einem Antriebsritzel 40 des Stellmotors 29 bzw. einem Zwischenritzel und einer strichpunktiert angedeuteten Außenverzahnung 47 des radseitigen Drehteils 21 in unterschiedlichen Betriebszuständen gezeigt. Demzufolge erstreckt sich die Außenverzahnung 47 nicht vollumfänglich um das radseitige Drehteil 21, sondern nur teilweise über ein Winkelsegment. Durch die Verkürzung der Außenverzahnung 47 auf einen Bereich nennenswert kleiner als 180° kann ein zusätzlich nutzbarer Bauraum 44 generiert werden. Durch entsprechende Positionierung des Antriebsritzels 40 kann der Bauraum 44 gezielt positioniert werden für beispielsweise einen Bremssattel, einen ABS-Sensor und/oder einen Lenker der Radaufhängung. Entsprechend kann auch die Außenverzahnung 55 des achsseitigen Drehteils 23 auf ein Winkelsegment verkürzt werden.

Nachfolgend sind anhand der Diagramme der Fig. 5 bis 7 beispielhaft unterschiedliche Sturz-/Spurbereiche S gezeigt, die durch die Bereitstellung unterschiedliche Bewegungsanschläge definiert sind. So sind gemäß der Fig. 5a die Drehwinkelanschläge A1, A2, B1, B2 im Radträger ausgebildet, die den Drehwinkel β des radseitigen Drehteils 21 auf einen Winkelbereich von ca. 50° bis ca. 220° begrenzen und den Drehwinkel θ des achsseitigen Drehteils 23 auf einen Winkelbereich von ca. 130° bis ca. 300° begrenzen. Der in der Fig. 5a mit gestrichelter Linie umrahmte Bereich der möglichen Verstellwinkel entspricht dem in der Fig. 5b dargestellten Spur-/Sturzwinkelbereich S, der von einer Hüllkurve 46 begrenzt ist. In der Fig. 5b weist der Spur-/Sturzwinkelbereich S einen positiven Sturzwinkelbereich S1 und einen negativen Sturzwinkelbereich S2 auf. Zudem ist in der Fig. 5b die definierte, zu einer Singularität führende Nulllage N innerhalb des Spur-/Sturzwinkelbereich S positioniert.

Im Unterschied dazu ist in den Fig. 6a und 6b zusätzlich zu den Drehwinkelanschlägen A1, A2, B1, B2 der Bewegungsanschlag C bereitgestellt, der unmittelbar zwischen dem Trägerteil 3 und dem Führungsteil 17 wirkt, das heißt den Verlagerungsweg Δy (Fig. 4b) des Trägerteils 3 begrenzt. Mittels des Bewegungsanschlags C wird der zulässige Spur-/Sturzwinkelbereich S weiter beschränkt, und zwar unter Wegfall des für die Sturz- und/oder Spurverstellung nicht erforderlichen positiven Sturzwinkelbereiches S1. Der maximal zulässige Sturzwinkel ε ist in der Fig. 6b beispielhaft auf ca. -2° begrenzt. Zudem ist die zu einer Singularität führende Nulllage N regelungstechnisch vorteilhaft nunmehr außerhalb des Spur-/Sturzwinkelbereich S positioniert und kann daher nicht mehr angesteuert werden. Gemäß der Fig. 6b erfolgt die Sturz- und Spurverstellung in einem technisch sinnvollen Bereich, und zwar ausgehend von einer der Drehteil-Grundstellung G beispielsweise über einen Sturzwinkel ε von ca. +2,5° / -5,5° und über einen Spurwinkel δ von ca. +/- 6,5°.

Der unmittelbar zwischen dem Trägerteil 3 und dem Führungsteil 17 zwischengeschaltete Bewegungsanschlag C ist aufgrund der Eigenübersetzung des Aktors (das heißt die Drehteile 21, 23) äußerst großen Kräften ausgesetzt und muss daher entsprechend stabil und damit gewichtintensiv ausgelegt sein. Demgegenüber sind die Bewegungsanschläge A, B und D an den Drehteilen 21, 23 besonders einfach umsetzbar und mit geringem Gewicht sowie geringen Kosten verbunden. Außerdem sind die Anschläge A, B, D nicht so empfindlich gegen Toleranzen wie der Anschlag C.

Vor diesem Hintergrund ist die in den Fig. 7a und 7b gezeigten Ausführungsbeispiel von Vorteil, in dem der in der Fig. 7b gezeigte verfügbare Sturz/Spurwinkelbereich S im Wesentlichen identisch mit dem in der Fig. 6b ist. Der in der Fig. 7a mit gestrichelter Linie umrahmte Bereich der möglichen Verstellwinkel entspricht dem in der Fig. 7b dargestellten Spur/Sturzwinkelbereich S, der von der Hüllkurve 46 begrenzt ist. In dem Ausführungsbeispiel der Fig. 7a und 7b wird jedoch auf den Bewegungsanschlag C verzichtet und wird anstelle dessen der Bewegungsanschlag D umgesetzt, der mit seinen Mitnehmerelementen 36 (Fig. 2) die Relativdrehung der beiden Drehteile 21, 23 begrenzt, und zwar so dass bei einer Drehverstellung zumindest eines der Drehteile 21, 23 eine Bewegungskopplung erzeugt wird, bei der die beiden Drehteile 21, 23 über einen Verstellweg V (Fig. 7a) sowohl gleichsinnig als auch mit identischer Verstellgeschwindigkeit verstellt werden. Sofern der Bewegungsanschlag D in Kontakt ist, können die beiden Drehteile 21, 23 sich nicht weiter relativ zueinander bewegen. Es sind nur noch gekoppelte Bewegungen möglich oder die Relativbewegung derart, dass die Kontaktstelle des Bewegungsanschlags D wieder geöffnet wird.

Je nachdem, welche Umfangslänge die Mitnehmerelemente 36 aufweisen, kann der Bewegungsanschlag D auch beidseitig wirken. Entsprechend würde sich der Verstellbereich β, θ zwischen zwei Winkelhalbierenden im Diagramm der Fig. 7a ausbilden.

Die oben beschriebenen Bewegungsanschläge A1, A2, B1, B2, C, D können auch im elektronischen Steuergerät 30 berücksichtigt werden. Insbesondere können die mechanischen Bewegungsanschläge A1, A2, B1, B2, C, D zum Anlernen der Drehwinkel-Sensorik zum Erfassen der Drehpositionen der Drehteile 21, 23 eingesetzt werden.

## Patentansprüche

1. Radträger für ein zweispuriges Kraftfahrzeug, der mehrteilig mit einem ein Fahrzeugrad (13) tragenden, radseitigen Trägerteil (3) und einem achsseitigen Führungsteil (17) sowie dazwischen angeordneten rad- und achsseitigen Drehteilen (21, 23) aufgebaut ist, die jeweils um Drehwinkel (θ, β) gleich- oder gegensinnig verstellbar sind und an einer gemeinsamen Lagerstelle (31) um eine Drehachse (24) zueinander verdrehbar abgestützt sind, um welche Drehachse (24) das Trägerteil (3) zur Spur-/Sturzverstellung des Fahrzeugrads (13) um einen Taumelpunkt (MP) verschwenkbar ist, und zwar durch eine Drehverstellung zumindest eines der Drehteile (21, 23) um Drehwinkel (θ, β) in eine Drehposition, die mit einem Spur- und/oder Sturzwinkel (δ, ε) des Fahrzeugrads (13) korreliert, der innerhalb eines Spur-/Sturzwinkelbereichs (S) beliebig einstellbar ist, **dadurch gekennzeichnet, dass** der Radträger zumindest einen Bewegungsanschlag (A1, A2, B1, B2, C, D) aufweist, mit dem der Spur-/Sturzwinkelbereich (S) des Fahrzeugrads (13) begrenzbar ist, und dass der Bewegungsanschlag (A1, A2, B1, B2) zumindest ein Drehwinkelanschlag ist, der eine Drehverstellung zwischen dem drehfesten radseitigen Trägerteil (3) und dem radseitigen Drehteil (21) oder zwischen dem drehfesten achsseitigen Führungsteil (17) und dem achsseitigen Drehteil (23) begrenzt.

2. Radträger nach Anspruch 1, **dadurch gekennzeichnet, dass** mittels des Drehwinkelanschlags (A1, A2, B1, B2) die Drehverstellung des Drehteils (21, 23) auf ein Winkelsegment (Δβ, Δθ) begrenzt ist, das kleiner als 180° ist, und/oder dass die Bewegungsanschläge (A1, A2, B1, B2) mit jeweils zugewandten Enden der Verzahnungen (47, 55) der Drehteile (21, 23) zusammenwirken.

3. Radträger nach Anspruch 1, **dadurch gekennzeichnet, dass** der Bewegungsanschlag (C) bei einer Sturz-/Spurverstellung des Fahrzeugrads (13) einen Verlagerungsweg (Δy) des Trägerteils (3) in Richtung auf das Führungsteil (17) begrenzt, und dass der Bewegungsanschlag (C) Druckelemente (32) aufweist, die am Trägerteil (3) und/oder am Führungsteil (17) ausgebildet sind und bei einer Sturz-/Spurverstellung des Fahrzeugrads (13) miteinander in Druckanlage bringbar sind.

4. Radträger nach Anspruch 1, **dadurch gekennzeichnet, dass** der Bewegungsanschlag (D) Mitnehmerelemente aufweist, die zwischen den beiden Drehteilen (21, 23) geschaltet sind, und/oder dass der Bewegungsanschlag (D) bei einer Drehverstellung zumindest eines der Drehteile (21, 23) eine Bewegungskopplung erzeugen, bei der die beiden Drehteile (21, 23) über einen Verstellweg (V) sowohl gleichsinnig als auch mit identischer Verstellgeschwindigkeit verstellbar sind.

5. Radträger nach einem der vorhergehenden Ansprüche, **dadurch gekennzeichnet, dass** der Drehwinkelanschlag (A1, A2, B1, B2) und/oder der Bewegungsanschlag (D) mechanische Anschlagelemente aufweisen, die am radseitigen Trägerteil (3), an den Drehteilen (21, 23) und/oder am achsseitigen Führungsteil (17) ausgebildet sind, oder dass die Bewegungsanschläge elektronisch ausgeführt sind, und zwar als Endlagen-Schalter.

6. Radträger nach einem der vorhergehenden Ansprüche, **dadurch gekennzeichnet, dass** zur Spur-/Sturzverstellung ein elektronisches Steuergerät (30) mit einer Auswerteeinheit bereitstellbar ist, in der in Abhängigkeit von Fahrbetriebsparametern des Fahrzeugs Wertepaare, bestehend aus einem Drehwinkel (β) für das Drehteil (21) und aus einem Drehwinkel (θ) für das Drehteil (23), ermittelbar sind, auf deren Grundlage die Antriebseinheit (29) des Drehteils (21, 23) ansteuerbar ist.

7. Radträger nach einem der vorhergehenden Ansprüche, **dadurch gekennzeichnet, dass** das radseitige Drehteil (21) unter Bildung einer Drehteil-Achse (20) an einer Lagerstelle (43) drehbar mit dem radseitigen Trägerteil (3) verbunden ist, und dass das achsseitige Drehteil (23) unter Bildung einer Drehteil-Achse (22) an einer Lagerstelle (51) drehbar mit dem Führungsteil (17) verbunden.

8. Radträger nach Anspruch 7, **dadurch gekennzeichnet, dass** die Achsen (20, 22) der Drehteile (21, 23) in einer Nulllage (N) unter Bildung einer Singularität zueinander koaxial, das heißt fluchtend ausgerichtet sind, und dass die mit der Nulllage (N) korrelierenden Spur- und Sturzwinkel (δ, ε) außerhalb des von den Anschlägen (A1, A2, B1, B2, C, D) definierten Spur-/Sturzbereiches (S) des Fahrzeugrads (13) liegen, oder dass zur Vermeidung von Singularität die Lage der Achsen (20, 22) der Drehteile (21, 23) so ausgelegt ist, dass diese zu keinem Betriebszeitpunkt zueinander koaxial ausgerichtet sind.

9. Radträger nach einem der vorhergehenden Ansprüche, **dadurch gekennzeichnet, dass** zumindest ein Drehteil (21, 23) eine Außenverzahnung (47, 55) aufweist, die Bestandteil einer Getriebestufe ist, die mit einer Drehteil-Antriebseinheit (29) trieblich verbunden ist, und dass die Außenverzahnung (47, 55) sich nicht vollumfänglich, sondern über ein Winkelsegment nur teilweise um das Drehteil (21, 23) erstreckt.

10. Radträger nach einem der vorhergehenden Ansprüche, **dadurch gekennzeichnet, dass** der zumindest eine Bewegungsanschlag (A1, A2, B1, B2, C, D) zur Reduzierung von Lastspitzen mit entsprechend weicher Kennung ausgelegt ist, und dass die Kennung unterschiedliche degressive, progressive oder linearen Verläufe aufweisen kann.

11. Radträger nach einem der vorhergehenden Ansprüche, **dadurch gekennzeichnet, dass** der zumindest eine Bewegungsanschlag (A1, A2, B1, B2, C, D) zum Anlernen einer Drehwinkel-Sensorik einsetzbar ist, mit der die Drehpositionen der Drehteile (21, 23) erfassbar sind, und dass bei einer Anlage mit dem Bewegungsanschlag (A1, A2, B1, B2, C, D) das System zu diesem Zeitpunkt die absolute Lage der jeweiligen Drehteils (21, 23) erkennt.

12. Radträger nach einem der vorhergehenden Ansprüche, **dadurch gekennzeichnet, dass** die Bewegungsanschläge (A1, A2, B1, B2, C, D) im elektronischen Steuergerät (30) berücksichtigt sind.

## Claims

1. Hub carrier for a two-track motor vehicle, which is constructed in several parts with a wheel-side carrier part (3) carrying a vehicle wheel (13) and an axle-side guide part (17) as well as rotary parts (21, 23) arranged therebetween on the wheel and axle sides, which are each adjustable by angles of rotation (θ, β) in the same or opposite directions and are supported at a common bearing point (31) so as to be rotatable relative to one another about an axis of rotation (24), about which axis of rotation (24) the carrier part (3) can be pivoted about a wobble point (MP) for toe/camber adjustment of the vehicle wheel (13), namely by a rotational adjustment of at least one of the rotary parts (21, 23) by rotational angles (θ, β) into a rotational position which correlates with a toe and/or camber angle (δ, ε) of the vehicle wheel (13 ), which can be set as desired within a toe/camber angle range (S), **characterised in that** the hub carrier has at least one movement stop (A1, A2, B1, B2, C, D) with which the toe/camber angle range (S) of the vehicle wheel (13) can be limited, and **in that** the movement stop (A1, A2, B1, B2) is at least an angle-of-rotation stop which limits a rotational adjustment between the rotationally fixed wheel-side carrier part (3) and the wheel-side rotary part (21) and/or between the rotationally fixed axle-side guide part (17) and the axle-side rotary part (23).

2. Hub carrier according to claim 1, **characterised in that** by means of the angle-of-rotation stop (A1, A2, B1, B2), the rotary adjustment of the rotary part (21, 23) is limited to an angular segment (Δβ, Δθ) that is smaller than 180°, and/or **in that** the movement stops (A1, A2, B1, B2) cooperate with respective facing ends of the toothings (47, 55) of the rotary parts (21, 23).

3. Hub carrier according to claim 1, **characterised in that** the movement stop (C) limits a displacement path (Δy) of the carrier part (3) in the direction of the guide part (17) during a camber/toe adjustment of the vehicle wheel (13), and **in that** the movement stop (C) has pressure elements (32) which are formed on the carrier part (3) and/or on the guide part (17) and can be brought into pressure contact with one another during a camber/toe adjustment of the vehicle wheel (13).

4. Hub carrier according to claim 1, **characterised in that** the movement stop (D) has entrainment elements which are connected between the two rotary parts (21, 23), and/or in that the movement stop (D) generate a movement coupling during a rotary adjustment of at least one of the rotary parts (21, 23), in which the two rotary parts (21, 23) are adjustable over an adjustment path (V) both in the same direction and with identical adjustment speed.

5. Hub carrier according to any one of the preceding claims, **characterised in that** the angle-of-rotation stop (A1, A2, B1, B2) and/or the movement stop (D) have mechanical stop elements that are formed on the wheel-side carrier part (3), on the rotary parts (21, 23) and/or on the axle-side guide part (17), or **in that** the movement stops are configured electronically, namely as end-position switches.

6. Hub carrier according to any one of the preceding claims, **characterised in that** an electronic controller (30) with an evaluation unit can be provided for the toe/camber adjustment, in which value pairs, consisting of a rotation angle (β) for the rotary part (21) and of a rotation angle (θ) for the rotary part (23), can be determined as a function of driving operation parameters of the vehicle, on the basis of which value pairs the drive unit (29) of the rotary part (21, 23) can be actuated.

7. Hub carrier according to any one of the preceding claims, **characterised in that** the wheel-side rotary part (21) is rotatably connected to the wheel-side carrier part (3) at a bearing point (43) to form a rotary part axis (20), and **in that** the axle-side rotary part (23) rotatably connected to the guide part (17) at a bearing point (51) to form a rotary part axis (22).

8. Hub carrier according to claim 7, **characterised in that** the axes (20, 22) of the rotary parts (21, 23) are aligned coaxially, i.e. in alignment, with one another in a zero position (N), forming a singularity, and **in that** the toe and camber angles (δ, ε) correlating with the zero position (N) lie outside the toe/camber range (S) of the vehicle wheel (13) defined by the stops (A1, A2, B1, B2, C, D), or **in that**, in order to avoid singularity, the position of the axes (20, 22) of the rotary parts (21, 23) is designed in such a way that they are not aligned coaxially with one another at any time during operation.

9. Hub carrier according to any one of the preceding claims, **characterised in that** at least one rotary part (21, 23) has an external toothing (47, 55) that is part of a gear stage drivingly connected to a rotary part drive unit (29), and **in that** the external toothing (47, 55) does not extend completely around the rotary part (21, 23), but only partially over an angular segment.

10. Hub carrier according to any one of the preceding claims, **characterised in that** the at least one movement stop (A1, A2, B1, B2, C, D) is designed to reduce load peaks with a correspondingly soft characteristic, and **in that** the characteristic can have different degressive, progressive or linear courses.

11. Hub carrier according to any one of the preceding claims, **characterised in that** the at least one movement stop (A1, A2, B1, B2, C, D) can be used for teaching a rotation angle sensor system, by means of which the rotational positions of the rotary parts (21, 23) can be detected, and **in that**, in the event of contact with the movement stop (A1, A2, B1, B2, C, D), the system detects the absolute position of the respective rotary part (21, 23) at that point in time.

12. Hub carrier according to any one of the preceding claims, **characterised in that** the movement stops (A1, A2, B1, B2, C, D) are taken into account in the electronic control device (30).

## Revendications

1. Support de roue pour un véhicule automobile à deux voies, qui est réalisé en plusieurs parties avec une partie support (3) située côté roue et supportant une roue de véhicule (13) et une partie guidage (17) située côté essieu et des parties rotatives (21, 23), situées côté roue et côté essieu et agencées entre lesdites parties support et guidage, et qui peuvent être respectivement réglées dans la même direction ou dans des directions opposées selon des angles de rotation (θ, β) et qui sont soutenues au niveau d'un point d'appui (31) commun de manière à pouvoir tourner l'une par rapport à l'autre autour d'un axe de rotation (24), axe de rotation (24) autour duquel la partie support (3) peut pivoter autour d'un point de bascule (MP) afin de régler le pincement/le carrossage de la roue de véhicule (13), en particulier grâce à un réglage en rotation d'au moins une des parties rotatives (21, 23) selon des angles de rotation (θ, β) jusqu'à une position de rotation qui correspond à un angle de pincement et/ou de carrossage (δ, ε), pouvant être ajusté de manière quelconque à l'intérieur d'une plage d'angles de pincement/de carrossage (S), de la roue de véhicule (13), **caractérisé en ce que** le support de roue présente au moins une butée de déplacement (A1, A2, B1, B2, C, D) grâce à laquelle la plage d'angles de pincement/de carrossage (S) de la roue de véhicule (13) peut être limitée, et **en ce que** la butée de déplacement (A1, A2, B1, B2) est au moins une butée d'angle de rotation qui limite un réglage en rotation entre la partie support (3) située côté roue et solidaire en rotation et la partie rotative (21) située côté roue ou entre la partie guidage (17) située côté essieu et solidaire en rotation et la partie rotative (23) située côté essieu.

2. Support de roue selon la revendication 1, **caractérisé en ce que** le réglage en rotation de la partie rotative (21, 23) est limité au moyen de la butée d'angle de rotation (A1, A2, B1, B2) à un segment angulaire (Δβ, Δθ) inférieur à 180°, et/ou **en ce que** les butées de déplacement (A1, A2, B1, B2) coopèrent avec des extrémités tournées l'une vers l'autre des dentures (47, 55) des parties rotatives (21, 23).

3. Support de roue selon la revendication 1, **caractérisé en ce que** la butée de déplacement (C) limite une trajectoire de déplacement (Δy) de la partie support (3) en direction de la partie guidage (17) lors d'un réglage de carrossage/de pincement de la roue de véhicule (13), et **en ce que** la butée de déplacement (C) présente des éléments de pression (32) réalisés au niveau de la partie support (3) et/ou au niveau de la partie guidage (17) et pouvant être mis en contact de pression les uns avec les autres lors d'un réglage de carrossage/de pincement de la roue de véhicule (13).

4. Support de roue selon la revendication 1, **caractérisé en ce que** la butée de déplacement (D) présente des éléments d'entraînement montés entre les deux parties rotatives (21, 23), et/ou **en ce que** la butée de déplacement (D) produit, lors d'un réglage en rotation d'au moins une des parties rotatives (21, 23), un accouplement de déplacement pour lequel les deux parties rotatives (21, 23) peuvent être réglées à la fois dans le même sens et à une vitesse de réglage identique par l'intermédiaire d'une course de réglage (V).

5. Support de roue selon l'une quelconque des revendications précédentes, **caractérisé en ce que** la butée d'angle de rotation (A1, A2, B1, B2) et/ou la butée de déplacement (D) présentent des éléments de butée mécaniques qui sont réalisés au niveau de la partie support (3) située côté roue, au niveau des parties rotatives (21, 23) et/ou au niveau de la partie guidage (17) située côté essieu, ou **en ce que** les butées de déplacement sont mises en œuvre de manière électronique, en particulier sous la forme de commutateurs de fin de course.

6. Support de roue selon l'une quelconque des revendications précédentes, **caractérisé en ce que**, afin de régler le pincement/le carrossage, il est possible de fournir un appareil de commande électronique (30) muni d'une unité d'évaluation, au sein duquel des paires de valeurs, consistant en un angle de rotation (β) pour la partie rotative (21) et en un angle de rotation (θ) pour la partie rotative (23) et sur la base desquelles l'unité d'entraînement (29) de la partie rotative (21, 23) peut être commandée, peuvent être déterminées en fonction de paramètres de conduite du véhicule.

7. Support de roue selon l'une quelconque des revendications précédentes, **caractérisé en ce que** la partie rotative (21) située côté roue est reliée rotative à la partie support (3) située côté roue au niveau d'un point d'appui (43) avec formation d'un axe de partie rotative (20), et **en ce que** la partie rotative (23) située côté essieu est reliée rotative à la partie guidage (17) au niveau d'un point d'appui (51) avec formation d'un axe de partie rotative (22).

8. Support de roue selon la revendication 7, **caractérisé en ce que** les axes (20, 22) des parties rotatives (21, 23) sont orientés de manière coaxiale l'un par rapport à l'autre, c'est-à-dire en alignement, dans une position zéro (N) avec formation d'une singularité, et **en ce que** les angles de pincement et de carrossage (δ, ε) en correspondance avec la position zéro (N) se situent à l'extérieur de la plage de pincement/de carrossage (S), définie par les butées (A1, A2, B1, B2, C, D), de la roue de véhicule (13), ou **en ce que**, afin d'éviter une singularité, la position des axes (20, 22) des parties rotatives (21, 23) est conçue de sorte qu'ils ne sont à aucun moment de fonctionnement orientés de manière coaxiale l'un par rapport à l'autre.

9. Support de roue selon l'une quelconque des revendications précédentes, **caractérisé en ce qu'**au moins une partie rotative (21, 23) présente une denture extérieure (47, 55) faisant partie d'un étage de transmission relié en entraînement à une unité d'entraînement de partie rotative (29), et **en ce que** la denture extérieure (47, 55) ne s'étend pas sur toute la circonférence mais seulement partiellement autour de la partie rotative (21, 23) sur un segment angulaire.

10. Support de roue selon l'une quelconque des revendications précédentes, **caractérisé en ce que** la au moins une butée de déplacement (A1, A2, B1, B2, C, D) est conçue pour réduire des pics de charge selon une courbe caractéristique évolutive correspondante, et **en ce que** la courbe caractéristique peut présenter des tracés dégressifs, progressifs ou linéaires différents.

11. Support de roue selon l'une quelconque des revendications précédentes, **caractérisé en ce que** la au moins une butée de déplacement (A1, A2, B1, B2, C, D) peut être utilisée pour l'apprentissage d'un système de détection d'angle de rotation avec lequel les positions de rotation des parties rotatives (21, 23) peuvent être détectées, et **en ce que**, lors d'un contact avec la butée de déplacement (A1, A2, B1, B2, C, D), le système détecte à cet instant la position absolue de la partie rotative (21, 23) respective.

12. Support de roue selon l'une quelconque des revendications précédentes, **caractérisé en ce que** les butées de déplacement (A1, A2, B1, B2, C, D) sont prises en compte au sein de l'appareil de commande électronique (30).
